# EUROPEAN PATENT APPLICATION

(11) **EP 4 620 278 A1**
(43) Date of publication of application: **24.09.2025**
(21) Application number: 25158333.2
(22) Date of filing: 17.02.2025
(51) Int. Cl.: A01B 69/04, B62D 1/28, E02F 9/20, G05D 1/227

(54) **WORK VEHICLE, AUTOMATED TRAVELING METHOD, AND PROGRAM**

(30) Priority: 08.03.2024 JP 2024036070
(71) Applicant: Yanmar Holdings Co., Ltd., Osaka-shi, Osaka (JP)
(72) Inventor: SUZUKI, Shogo, Okayama (JP); KODAMA, Maroi, Okayama (JP); ISHIDA, Tomoki, Okayama (JP)
(74) Representative: Novagraaf International SA

(57) **Abstract**

[Problem] To provide an art capable of appropriately performing an operation using a remote operation device in a work vehicle provided capable of automated traveling.

[Solution] An exemplary work vehicle includes: a vehicle main-body provided capable of automated traveling in which at least steering is automatedly performed; and a remote operation device configured to operate the vehicle main-body, in which the vehicle main-body starts turning by the automated traveling by performing a first operation of instructing a turning direction and a second operation subsequent to the first operation in the remote operation device.

## Description

### TECHNICAL FIELD

The present invention relates to a work vehicle, an automated traveling method, and a program.

### BACKGROUND ART

Conventionally, a work vehicle which can be manually operated by a transmitter has been known (for example, see Patent Document 1). In Patent Document 1, the transmitter is constituted such that an operator can manually operate the grass mower while carrying the transmitter. The transmitter is, for example, a proportional-type controller operated by an operator at hand or a portable terminal device having a touch-panel type display screen.

### PRIOR ART DOCUMENT

### PATENT DOCUMENT

Patent Document 1: Japanese Unexamined Patent Publication No. 2019-106941

### SUMMARY OF INVENTION

### TECHNICAL PROBLEM

In the case of a configuration in which the work vehicle can be remotely controlled as in Patent Document 1, a turning direction of the work vehicle as viewed from the operator in response to a turning instruction is reversed depending on whether the traveling direction of the work vehicle is a direction toward the operator or a direction away from the operator. For example, when the work vehicle is advancing in the direction away from the operator, if a left turn is instructed using a remote operation device, the work vehicle turns to the left as viewed from the operator. On the other hand, when the work vehicle is traveling in the direction toward the operator, if a left turn is instructed using the remote operation device in the same manner, the work vehicle turns to the right as viewed from the operator.

Therefore, if the operator is unfamiliar with the remote operation, the operator may make a mistake in the operation to right or left. In particular, in the case of a configuration that turning by automated traveling is started in response to a right or left turning instruction by an operator using a remote operation device, such a situation may occur that automated turning in a direction opposite to the direction intended by the operator is started by an erroneous operation, and the turning operation cannot be easily stopped. As a result, there is a possibility that work loss increases.

In view of the above-described points, an object of the present invention is to provide an art capable of appropriately performing an operation using a remote operation device in a work vehicle provided capable of automated traveling.

### SOLUTION TO PROBLEM

An exemplary work vehicle of the present invention includes: a vehicle main-body provided capable of automated traveling in which at least steering is automatedly performed; and a remote operation device configured to operate the vehicle main-body, in which the vehicle main-body starts turning by the automated traveling by performing a first operation of instructing a turning direction and a second operation subsequent to the first operation in the remote operation device.

An exemplary automated traveling method of the present invention is a method of automated traveling in a work vehicle in which a vehicle main-body is operated by a remote operation device, the method including: receiving a first operation of instructing a turning direction by the remote operation device; and causing the vehicle main-body to start turning by the automated traveling by a second operation subsequent to the first operation by the remote operation device.

An exemplary program of the present invention is a program for causing a computer to execute a method of automated traveling in a work vehicle in which a vehicle main-body is operated by a remote operation device, the program causing the computer to function as means for receiving a first operation of instructing a turning direction by the remote operation device, and causing the vehicle main-body to start turning by the automated traveling by a second operation subsequent to the first operation by the remote operation device.

### ADVANTAGEOUS EFFECTS OF INVENTION

According to the exemplary present invention, it is possible to appropriately perform an operation using a remote operation device in a work vehicle provided capable of automated traveling.

### BRIEF DESCRIPTION OF DRAWINGS

FIG. 1 is a view illustrating a schematic configuration of a work vehicle;
FIG. 2 is a front view illustrating a schematic configuration of a remote operation device;
FIG. 3 is a block diagram illustrating a schematic configuration of a vehicle main-body;
FIG. 4 is a diagram for explaining an example of a method of setting a reference line;
FIG. 5 is a flowchart exemplifying a flow of an automated traveling method;
FIG. 6A is a diagram for explaining a notification operation performed in a vehicle main-body with a first operation; and
FIG. 6B is a diagram for explaining the notification operation performed in a vehicle main-body with the first operation.

### DESCRIPTION OF EMBODIMENTS

An Embodiment of the present invention will be explained with reference to the drawings. Note that, in the drawings, the same or corresponding parts are denoted by the same reference numerals, and explanation thereof will not be repeated unless otherwise required.

### 1. Outline of Work Vehicle

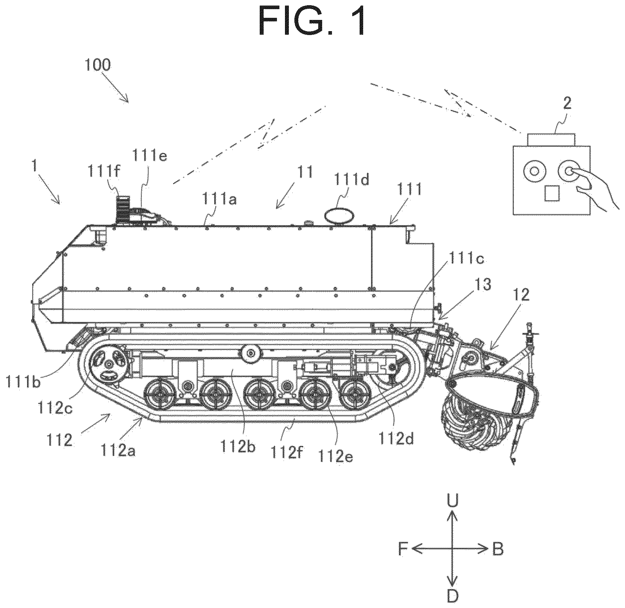

FIG. 1 is a diagram illustrating a schematic configuration of a work vehicle 100 according to an Embodiment of the present invention. The work vehicle 100 can be used to perform various kinds of work such as an agricultural work, a construction work and the like, for example. Note that the work vehicle of the present invention is not limited to the work vehicle illustrated in FIG. 1 but may be tractors, rice planters, combine harvesters, harvesters for various crops, snowblowers, various civil engineering / construction work machines and the like.

As shown in FIG. 1, the work vehicle 100 includes a vehicle main-body 1 and a remote operation device 2. Note that FIG. 1 illustrates a side view of the vehicle main-body 1.

### 1-1. Vehicle Main-Body

The vehicle main-body 1 is provided capable of automated traveling in which at least steering is automatedly performed. The automated traveling may be constituted such that, in addition to the steering, at least either one of vehicle speed control and a work by the work machine is performed automatedly, for example. The automated traveling in this specification also includes such a configuration. However, in the following explanation, the automated traveling exemplifies is such a configuration that the steering is performed automatedly, and the vehicle speed control and the work by the work machine are performed manually.

As shown in FIG. 1, the vehicle main-body 1 includes a traveling machine-body 11 that travels on the ground, and a work machine 12 that is coupled to the traveling machine-body 11.

Here, for convenience of explanation, directions in the following explanation will be defined. A direction in which the traveling machine-body 11 and the work machine 12 are aligned is referred to as a front-rear direction, and the work machine 12 is assumed to be on the rear side when viewed from the traveling machine-body 11. A left-right direction is defined such that a side to be left when viewed from the rear to the front is a left side and a side to be right is a right side. In addition, a gravity direction perpendicular to the front-rear direction and the right-left direction is defined as an up-down direction, an upstream side in the gravity direction is defined as "upward", and a downstream side is defined as "downward". In the drawings, when necessary, forward is denoted by a symbol "F", backward by "B", rightward by "R", leftward by "L", upward by "U", and downward by "D".

However, the above definitions of the directions are for convenience. In addition, in the following explanation, a reference direction expression different from the direction defined here may be used, but in that case, the explanation will be given with a notice to that effect.

The traveling machine-body 11 includes a machine main-body portion 111 and a traveling portion 112 disposed below the machine main-body portion 111.

The machine main-body portion 111 includes an outer cover 111a, a traveling drive device 111b disposed on the inner front side covered by the outer cover 111a, and a work-machine drive device 111c disposed on the inner rear side covered by the outer cover 111a.

The traveling drive device 111b includes a drive source and a power transmission mechanism that transmits power from the drive source to the traveling portion 112. In this Embodiment, the drive source included in the traveling drive device 111b is an electric motor. However, the drive source included in the traveling drive device 111b may be other than the electric motor and may be, for example, an engine.

The work-machine drive device 111c includes a drive source and a Power Take Off (PTO) power transmission portion capable of transmitting power from the drive source to an outside of the traveling machine-body 11. In the present embodiment, the drive source included in the work-machine drive device 111c is an electric motor. However, the drive source included in the work-machine drive device 111c may be other than the electric motor, and may be, for example, an engine. In addition, in this Embodiment, the electric motor included in the work-machine drive device 111c and the electric motor included in the traveling drive device 111b are different motors. However, the traveling drive device 111b and the work-machine drive device 111c may share a drive source.

Inside the outer cover 111a, other than the above, a battery that supplies electric power to the electric motor, a power electronics device and the like are disposed. As an example, a light 111d, a positioning antenna 111e, an alarm lamp 111f and the like are disposed outside the outer cover 111a.

Note that in this Embodiment, a driver's seat for an operator is not provided in the traveling machine-body 11. That is, the vehicle main-body 1 performs unmanned working traveling. However, the present invention is applicable also to a work vehicle including the driver's seat in the traveling machine-body 11. That is, the traveling machine-body 11 may have a driver's seat, instruments (a steering wheel, a lever and the like) for an operator sitting on the driver's seat to steer the vehicle main-body 1.

The traveling portion 112 supports the machine main-body portion 111 capable of traveling. The traveling portion 112 includes a pair of right and left crawlers 112a specifically. Each of the left and right crawlers 112a includes a track frame 112b extending in the front-back direction. Each track frame 112b is attached to a lower surface of the machine main-body portion 111. A driving sprocket 112c is disposed as a driving wheel at a front end of the track frame 112b. Power from the electric motor is transmitted to the driving sprocket 112c via a power transmission mechanism included in the traveling drive device 111b. An idler 112d is disposed as a driven wheel at a rear end of the track frame 112b. The idler 112d is rotatably supported by the track frame 112b. In the track frame 112b, a plurality of rolling wheels 112e are rotatably supported in a part between the driving sprocket 112c and the idler 112d. A crawler belt 112f is wound around the driving sprocket 112c, the idler 112d, and a plurality of rolling wheels 112e so to constitute the crawler 112a.

In this Embodiment, each of the left and right crawlers 112a is driven by a plurality of electric motors included in the traveling drive device 111b. When the pair of left and right crawlers 112a are driven at the same time in the same direction, for example, the traveling portion 112 travels straight forward or rearward. Whether forward or backward is determined by a rotation direction of the electric motors. In addition, when the pair of left and right crawlers 112a are driven at different speeds, for example, the traveling portion 112 turns left or turns right.

Note that, in this Embodiment, the crawler 112a has such a configuration that one driving wheel (driving sprocket 112c) and one driven wheel (idler 112d) are aligned in the front-rear direction, and the crawler belt 112f is wound around, but another configuration may be adopted. For example, the crawler may be of a type in which a crawler belt is wound around one driving wheel and two driven wheels in a triangular shape. In addition, in this Embodiment, the traveling portion 112 is of a crawler type, but may be of a type other than the crawler type or may be, for example, a wheel type.

The work machine 12 is attached to the traveling machine-body 11 via a hitch portion 13, capable of being elevated up and down. Note that the hitch portion 13 includes the above-described work-machine drive device 111c. The work machine 12 is replaceably attached to the hitch portion 13. That is, the work machine 12 can be replaced with various types. In FIG. 1, the work machine 12 is a tiller. The work machine 12 may be, for example, a plow, a fertilizing device, an agrochemical sprinkler, a harvesting device, a reaping device, a snow removal device, a landfill device such as an earth removing plate or the like, in addition to a tiller. Note that, in this Embodiment, the work machine 12 is provided capable of being elevated up and down, but the work machine 12 does not have to be capable of being elevated up and down.

The constitution of the vehicle main-body 1 included in the work vehicle 100 only needs to have such a configuration having the traveling machine-body and the work machine or may be such a configuration other than the configurations explained above. For example, the work machine may be disposed not in the rear of the traveling machine-body but in front of the traveling machine-body or the like. In addition, for example, the work machine may be disposed in front and in the rear of the traveling machine-body.

### 1-2. Remote Operation Device

The remote operation device 2 is a device for operating the vehicle main-body 1. That is, the work vehicle 100 is a work vehicle in which the vehicle main-body 1 is operated by the remote operation device 2. Specifically, the remote operation device 2 is a device that enables an operator who is at a position away from the vehicle main-body 1 to operate the vehicle main-body 1.

The remote operation device 2 is provided capable of performing settings and operations related to manual traveling of the vehicle main-body 1. In addition, the remote operation device 2 is provided capable of performing settings and operations related to automated traveling of the vehicle main-body 1. The remote operation device 2 may be, for example, a proportional-type controller or a mobile terminal device having a touch-panel type display screen or the like. In this Embodiment, the remote operation device 2 is a proportional-type controller.

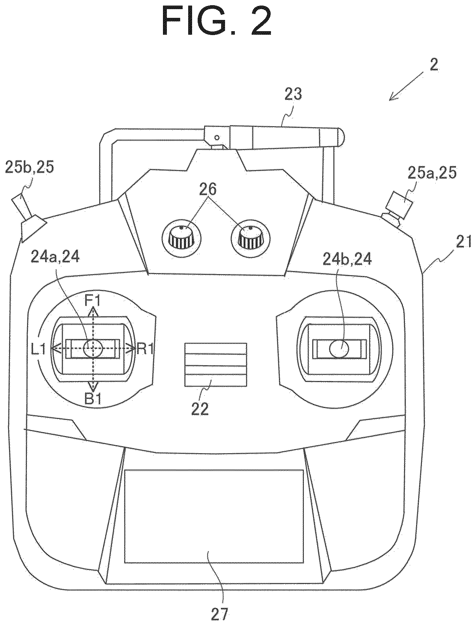

FIG. 2 is a front view showing a schematic configuration of the remote operation device 2 according to the Embodiment of the present invention. As shown in FIG. 2, the remote operation device 2 includes a housing 21, a power switch 22, an antenna 23, an operation lever 24, an operation switch 25, an operation knob 26, and a display portion 27.

The housing 21 constitutes a main body part of the remote operation device 2. The power switch 22, the antenna 23, the operation lever 24, the operation switch 25, the operation knob 26, and the display portion 27 described above are mounted on appropriate spots of the housing 21, respectively. Note that the disposition shown in FIG. 2 is merely exemplification and may be changed as appropriate.

The power switch 22 is provided at a center part of the front surface of the housing 21, capable of switching between an ON state and an OFF state of the power supply of the remote operation device 2. The power switch 22 is, for example, a seesaw switch. Note that the power supply of the remote operation device 2 is, for example, a battery or a dry cell disposed in the housing 21.

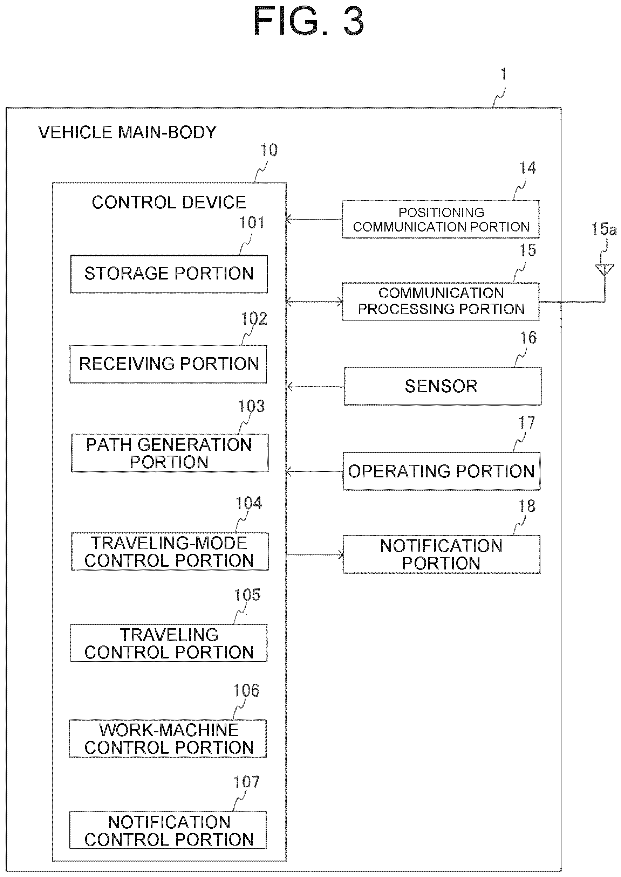

The antenna 23 is provided so as to protrude from a side surface of the housing 21 (in the example shown in FIG. 2, a side surface on the upper side of the drawing) and enables wireless communication with the vehicle main-body 1. In addition, an antenna 15a (see FIG. 3 described later) for performing wireless communication with the remote operation device 2 is provided in the vehicle main-body 1. When the power supply of the remote operation device 2 is turned on by the power switch 22, the remote operation device 2 can perform wireless communication with the vehicle main-body 1. When the power supply of the remote operation device 2 is turned off by the power switch 22, the remote operation device 2 cannot perform communication with the vehicle main-body 1. In this Embodiment, when communication cannot be performed with the remote operation device 2 any more, the vehicle main-body 1 during traveling automatedly stops traveling. That is, the power switch 22 has a function as an emergency stop switch of the vehicle main-body 1. Note that the emergency stop switch may be provided separately from the power switch 22.

The operation lever 24 enables a traveling operation of the vehicle main-body 1 and an operation of the work machine 12. In this Embodiment, the operation lever 24 includes a first operation lever 24a and a second operation lever 24b which are disposed side by side so as to sandwich the power switch 22. The first operation lever 24a (the left-side lever in the drawing in the example shown in FIG. 2) can be tilted in the two directions (F1-B1 direction and L1-R1 direction) orthogonal to each other, which are indicated by broken arrows in FIG. 2. In addition, it is also possible to tilt it to either one of sides in the L1-R1 direction while tilting it to either one of sides in the F1-B1 direction. Note that the second operation lever 24b (the right-side lever in the drawing in the example shown in FIG. 2) can also be tilted in the same directions as the first operation lever 24a. In addition, the functions of the first operation lever 24a and the second operation lever 24b, which will be described below, may be switched to each other.

In this Embodiment, the first operation lever 24a and the second operation lever 24b exert different functions depending on whether the vehicle main-body 1 is in the manual traveling mode or the automated traveling mode.

For example, in the manual traveling mode, when the first operation lever 24a is tilted in the F1 direction, the vehicle main-body 1 can be moved forward. In the manual traveling mode, when the first operation lever 24a is tilted in the B1 direction, vehicle main-body 1 can be moved backward. In the manual traveling mode, when the first operation lever 24a is tilted in the L1 direction while being tilted in the F1 or B1 direction (that is, when being tilted diagonally), the vehicle main-body 1 can be made to turn to the left. In the manual traveling mode, when the first operation lever 24a is tilted in the R1 direction while being tilted in the F1 or B1 direction (that is, when being tilted diagonally), the vehicle main-body 1 can be made to turn to the right. Other than the above, in the manual traveling mode, by operating the second operation lever 24b, the work machine 12 can be elevated up and down.

In the automated traveling mode, the first operation lever 24a and the second operation lever 24b exert a function of performing setting related to the automated traveling. Setting related to the automated traveling using the operation lever 24 will be described later. Note that, in this Embodiment, since the speed adjustment and the operation of the work machine 12 are manually performed even during the automated traveling of the vehicle main-body 1, the operations using the operation lever 24 for them are the same as those in the manual traveling mode.

Hereinafter, for ease of explanation, tilting the first operation lever 24a in the forward direction F1 is expressed as tilting in the direction F1. In addition, tilting the first operation lever 24a in the B1 direction is expressed as tilting in the backward direction B1. In addition, tilting the first operation lever 24a in the L1 direction is expressed as tilting in the left-turning direction L1. In addition, tilting the first operation lever 24a in the R1 direction is expressed as tilting in the right-turning direction R1.

The operation switch 25 enables various types of setting related to the vehicle main-body 1. In this Embodiment, the operation switch 25 includes a first operation switch 25a and a second operation switch 25b. The first operation switch 25a (in the example shown in FIG. 2, disposed on the side surface part on the upper right side of the drawing) is configured by a momentary switch and enables a plurality of types of setting related to automated traveling. Details of this will be described later. The second operation switch 25b (in the example shown in FIG. 2, disposed in the front surface part on the upper left side of the drawing) is configured by a toggle switch and is switchable between a state in which power transmission to the work machine 12 using the above-described PTO power transmission portion is possible and a state in which it is not possible.

Note that the types of the operation switches 25a and 25b explained above are merely exemplifications. The types of the operation switches 25a and 25b may be changed as appropriate.

The operation knobs 26 are disposed on the front surface of the housing 21 (in the example shown in FIG. 2, the upper side of the front surface of the drawing) and enables adjustment of the maximum speed (the upper limit value of the speed) of the vehicle main-body 1. Specifically, two pieces of the operation knobs 26 are provided. One of the two operation knobs 26 enables adjustment of the maximum speed of the vehicle main-body 1 in the straight traveling. The other of the two operation knobs 26 enables adjustment of the maximum speed of the vehicle main-body 1 in the turning traveling.

The display portion 27 is disposed on the front surface of the housing 21 (on the lower side of the front surface in the drawing in the example shown in FIG. 2) and displays various types of information to be notified to the operator. The various types of information may include, for example, display of a positional relationship between a traveling path and the vehicle main-body 1 during automated traveling or the like. The display portion 27 is configured by, for example, a liquid crystal display device, an organic EL display device or the like.

### 2. Configuration Related to Automated Traveling of Vehicle Main-Body

Subsequently, details of a configuration related to the automated traveling of the vehicle main-body 1 of this Embodiment will be explained. FIG. 3 is a block diagram illustrating a schematic configuration of the vehicle main-body 1 according to the Embodiment of the present invention. Note that, in FIG. 3, constituent elements required to explain the features of this Embodiment (mainly the configuration related to the automated traveling) are illustrated, and description on general constituent elements is omitted.

As shown in FIG. 3, the vehicle main-body 1 includes a control device 10. In other words, the work vehicle 100 includes the control device 10. For example, the control device 10 controls automated traveling of the vehicle main-body 1 in response to an instruction from the remote operation device 2.

The control device 10 is, for example, a computer device configured to include an arithmetic device, an input / output portion, and a storage portion 101. The arithmetic device is configured by, for example, a processor or a microprocessor. The storage portion 101 is a main storage device such as a Read Only Memory (ROM) and a Random Access Memory (RAM). The storage portion 101 may further include an auxiliary storage device such as an HDD (Hard Disk Drive) or an SSD (Solid State Drive). The storage portion 101 stores various programs, data and the like. The arithmetic device exerts various functions by reading various programs from the storage portion 101 and executing arithmetic processing in accordance with the programs. The program stored in the storage portion 101 may be provided by, for example, a computer-readable non-volatile recording medium. As another example, the programs may be provided from a program -providing server via a communication line such as the Internet.

The control device 10 can be operated as a receiving portion 102, a path generation portion 103, a traveling-mode control portion 104, a traveling control portion 105, a work-machine control portion 106, and a notification control portion 107 by cooperation with the above-described hardware and software. The control device 10 may be configured by a single piece of hardware, or may be configured by a plurality of pieces of hardware that can communicate with each other. Some of the functions of the control device 10 may be included in the remote operation device 2 or a server (not shown) that can communicate with the vehicle main-body 1.

Note that the functional portions 102 to 107 included in the control device 10 may be realized by causing an arithmetic device to execute arithmetic processing in accordance with a program as described above, that is, by software, but may be realized by another method. At least any one of the functional portions 102 to 107 may be realized by using Application Specific Integrated Circuit (ASIC), Field Programmable Gate Array (FPGA) or the like, for example. That is, at least any one of the functional portions 102 to 107 may be realized by hardware using a dedicated IC or the like. In addition, at least any one of the functional portions 102 to 107 may be realized by using both software and hardware. In addition, each of the functional portions 102 to 107 is a conceptual constituent element. The function implemented by a single constituent element may be distributed into a plurality of constituent elements. In addition, the functions of the plural constituent elements may be integrated into a single constituent element.

A positioning communication unit 14, a communication processing portion 15, a sensor 16, an operation portion 17, and a notification portion 18 are connected to the control device 10. That is, the vehicle main-body 1 includes the positioning communication unit 14, the communication processing portion 15, the sensor 16, the operation portion 17, and the notification portion 18.

The positioning communication unit 14 includes a positioning antenna 111e (see FIG. 1), and acquires the position of the vehicle main-body 1 as, for example, information on latitudes and longitudes by using a positioning signal received by the positioning antenna 111e from a positioning satellite. The positioning communication unit 14 outputs the positional information of the vehicle main-body 1 to the control device 10. For example, the positioning communication unit 14 receives a positioning signal from a reference station, not shown, by an appropriate method and then, performs positioning by using a publicly known Real Time Kinematic GNSS (RTK-GNSS) method. Note that, the positioning communication unit 14 may perform positioning by using another method such as Differential GNSS (DGNSS) method or the like. In addition, the vehicle main-body 1 may be configured to include a quantum compass capable of positioning, for example, instead of or in addition to the positioning communication unit 14.

The communication processing portion 15 performs communication with the remote operation device 2 via the communication antenna 15a. Note that the communication antenna 15a is an antenna for performing wireless communication with the remote operation device 2. For the wireless communication, a wireless Local Area Network (LAN) such as Wi-Fi (registered trademark) or the like may be used, for example.

The sensor 16 detects information related to the vehicle main-body 1 and outputs the detected information to the control device 10. In this Embodiment, the sensor 16 includes a plurality of types of sensors. Each of the plurality of types of sensors is connected to the control device 10 capable of inputting a signal. The plurality of types of sensors include, for example, an Inertial Measurement Unit (IMU), an obstacle sensor, a vehicle-speed sensor, an elevation-position sensor and the like.

Note that the inertial measurement unit is a device that includes a three-axis angular-speed sensor and a three-axis acceleration sensor, and can measure an attitude of the vehicle main-body 1. The obstacle sensor is a sensor that detects an obstacle existing around the vehicle main-body 1 and may be, for example, an ultrasonic sensor, a camera, a radar, or Light Detection And Ranging (LiDAR) or the like. The vehicle-speed sensor is a sensor that detects a speed of the vehicle main-body 1. The elevation-position sensor is a sensor that detects an elevated position of the work machine 12 provided capable of elevation.

The operation portion 17 is provided capable of inputting information to the control device 10. The operation portion 17 is provided capable of various types of setting related to the vehicle main-body 1. In this Embodiment, the various types of setting include at least some of the setting related to the automated traveling. Specifically, the setting related to the automated traveling that can be set by the operation portion 17 includes setting for switching between enabling and disabling of the automated turning function for turning by the automated traveling.

That is, the work vehicle 100 is provided capable of switching between enabling and disabling of the automated turning function for turning by the automated traveling. The vehicle main-body 1 includes a switching operation portion 17 that switches between enabling and disabling of the automated turning function. The switching operation portion that switches between enabling and disabling of the automated turning function may be provided in the remote operation device 2. However, in the case of the configuration in which the switching operation portion is provided not in the remote operation device 2 but in the vehicle main-body 1 as in this Embodiment, occurrence of such a state that enabling and disabling of the automated turning function are switched by an erroneous operation of the remote operation device 2 during the remote operation of the vehicle main-body 1 can be prevented.

Note that the operation portion 17 is preferably disposed at an easily operable position such as a front end part or a rear end part of the traveling machine-body 11, for example. The operation portion 17 may be configured by including at least any one of an operation button, an operation lever, an operation knob, and a touch panel, for example.

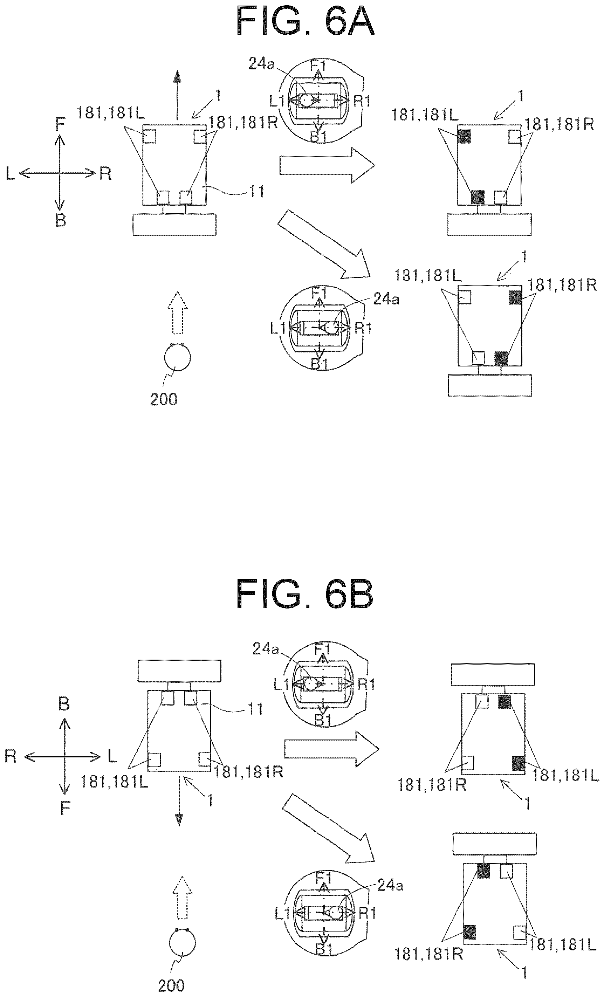

The notification portion 18 operates in response to an instruction from the control device 10 and operates when there is an item to be notified to an operator or the like who operates the remote operation device 2. The number of the notification portions 18 may be single but may be plural. The notification portion 18 may be, for example, a light emitting device, a sound outputting device, a display device and the like. In this Embodiment, the notification portion 18 includes a turning lamp 181 (see FIG. 6A and FIG. 6B, which will be described later) that notifies the turning direction of the vehicle main-body 1. Details of the notification using the turning lamp 181 will be described later.

The receiving portion 102 included in the control device 10 receives an instruction from the operator using the remote operation device 2. The instruction using the remote operation device 2 includes an instruction related to the automated traveling. In this Embodiment, the instruction received by the receiving portion 102 includes an instruction related to the manual traveling such as a traveling instruction at the time of manual traveling.

The path generation portion 103 generates a traveling path for causing the vehicle main-body 1 to perform automated traveling. In this Embodiment, the traveling path includes a plurality of paths disposed side by side. Specifically, each of the plurality of paths is a straight path. The plurality of straight paths are disposed parallel to one another. The traveling path including the plurality of straight paths (specifically, an automated-traveling work path) is generated as follows, for example.

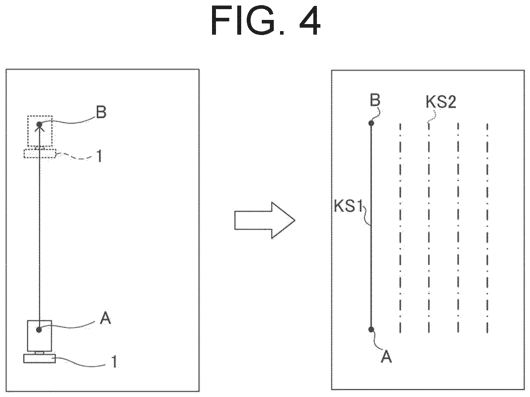

When the traveling path is generated, first, a reference line KS1 (see FIG. 4) is set. FIG. 4 is a diagram for explaining an example of a setting method of the reference line KS1. The left diagram of FIG. 4 is a diagram exemplifying movement of the vehicle main-body 1 when the reference line KS1 is generated. The right diagram of FIG. 4 is an image diagram of the generated reference line KS1 and the traveling path KS2 generated on the basis of the reference line KS1. Note that the setting method of the reference line KS1 may be a method other than the method illustrated in FIG. 4.

At the setting of the reference line KS1, first, the vehicle main-body 1 is moved to an appropriate place (point A in the drawing) of a work target place (a field in this Embodiment) by manual traveling, and the point A registration is made by using the remote operation device 2. Note that, in this Embodiment, the movement of the vehicle main-body 1 by the manual traveling is performed by using the first operation lever 24a (see FIG. 2) of the remote operation device 2. In addition, the point A registration using the remote operation device 2 is made by using the first operation switch 25a (see FIG. 2). By means of the operation of the first operation switch 25a, the receiving portion 102 receives the point A registration. Then, the path generation portion 103 registers the position of the vehicle main-body 1 obtained by the positioning communication unit 14 at the time when the setting of the point A registration was made as the position of the point A.

When the point A registration is made, the operator causes the vehicle main-body 1 to travel straight forward by manual traveling using the remote operation device 2 (specifically, the first operation lever 24a) and moves the vehicle main-body 1 to a target position (point B in the drawing). Then, when the vehicle main-body 1 reaches the target position, point B registration using the remote operation device 2 is made. The point B registration using the remote operation device 2 is made using the first operation switch 25a. Specifically, on the premise that the point A registration has already been made, when the first operation switch 25a is operated in the same manner as the point A registration, the receiving portion 102 receives the point B registration. Then, the path generation portion 103 registers the position of the vehicle main-body 1 obtained by the positioning communication unit 14 at the time when the setting of the point B registration was made as the position of the point B.

When the positions of the point A and the point B are registered, a straight line passing through the point A and the point B is set as the reference line KS1. Note that, this Embodiment is configured such that the same switch (the first operation switch 25a) is used to register the point A and the point B, but this is merely an example, and a switch for registering the point A and a switch for registering the point B may be separately provided in the remote operation device 2. In addition, the reference line may be, for example, a straight line that is parallel to the front-rear direction of the vehicle main-body 1 (own vehicle azimuth) at the time of the registration of the point A and passes through the point A. Furthermore, the reference line may be, for example, a straight line that passes through the point A and is parallel to the set azimuth. In the case of the above-described method of setting two reference lines shown as a variation, the registration of the point B is unnecessary.

When the reference line KS1 is set, the path generation portion 103 generates a traveling path (traveling path for automated traveling work) including a plurality of straight paths by aligning a plurality of lines KS2 (indicated by one dot chain lines in FIG. 4) parallel to the reference line KS1 at predetermined intervals. Note that, in this Embodiment, the automated-traveling work path is a straight path but it may be a curved path.

The traveling-mode control portion 104 performs switching control between the manual traveling mode and the automated traveling mode. That is, the work vehicle 100 includes the control device 10 that switches between the automated traveling mode in which the automated traveling is performed and the manual traveling mode in which traveling is performed by the manual operation. Note that, in this Embodiment, in the manual traveling mode, the operator operates the traveling of the vehicle main-body 1 and the operation of the work machine 12 by using the remote operation device 2. In addition, in the automated traveling mode, steering of the vehicle main-body 1 is automatedly performed, and the adjustment of the vehicle speed of the vehicle main-body 1 and the operation of the work machine 12 are operated by the operator using the remote operation device 2.

For example, the traveling-mode control portion 104 switches the traveling mode when the receiving portion 102 receives an instruction to switch the traveling mode by the operator using the first operation switch 25a. Specifically, in a case where the vehicle main-body 1 is in the manual traveling mode, when the receiving portion 102 receives the instruction to switch the traveling mode, the traveling-mode control portion 104 switches the traveling mode from the manual traveling mode to the automated traveling mode. In addition, in a case where the vehicle main-body 1 is in the automated traveling mode, when the receiving portion 102 receives an instruction to switch the traveling mode, the traveling-mode control portion 104 switches the traveling mode from the automated traveling mode to the manual traveling mode.

Note that, in this Embodiment, the switching instruction of the traveling mode is an operation of pressing the first operation switch 25a once. As described above, the first operation switch 25a is also used at the time of the registration instruction of the point A and the point B, but at this time, in order to distinguish from the switching instruction of the traveling mode, double pressing of pressing the first operation switch 25a twice in succession is used. That is, when the first operation switch 25a is pressed twice before the point A is registered, the point A registration is performed, and when the first operation switch 25a is pressed twice after the point A registration, the point B registration is performed. However, these instruction operations are merely an exemplification. For example, it may be so configured that the switching instruction of the traveling mode is made by pressing the first operation switch 25a twice, and the registration instruction of the point A or the point B may be given by pressing the switch once. In addition, the switch for switching the traveling mode may be a switch different from the switch for instructing the registration of the point A or the point B.

The traveling control portion 105 controls a traveling system of the vehicle main-body 1 in accordance with the traveling mode. When the traveling mode is the manual traveling mode, the traveling control portion 105 controls the traveling system of the vehicle main-body 1 in response to an instruction from the remote operation device 2. When the traveling mode is the automated traveling mode, the traveling control portion 105 executes automated control for at least a part of the traveling system of the vehicle main-body 1. In this Embodiment, for example, the traveling control portion 105 performs automated control of steering (automated steering) such that the vehicle main-body 1 travels along a predetermined path. At the time of automated control of the steering, for example, the position and direction of the vehicle main-body 1 are obtained on the basis of information obtained from the positioning communication unit 14 and the inertial measurement unit included in the sensor 16. Then, calculation related to the automated steering is executed in accordance with a positional relationship between the obtained position or the like of the vehicle main-body 1 and a predetermined traveling path for the automated traveling (a traveling path generated by the path generation portion 103), and the steering control according to the calculation result is executed.

The work-machine control portion 106 controls a work system of the vehicle main-body 1 in response to an instruction from the remote operation device 2. The control of the work system of the vehicle main-body 1 includes, for example, elevation control of the work machine 12 and switching control of a power transmission state to the work machine 12 using the PTO power transmission portion. Note that the work-machine control portion 106 may be configured such that the control of the work system of the vehicle main-body 1 is switched in accordance with the traveling mode. That is, in the case of the automated traveling mode, the work-machine control portion 106 may be configured such that the operation of the work machine 12 is automatedly controlled.

The notification control portion 107 controls the operation of the notification portion 18. The notification control portion 107 causes the notification portion 18 to perform a notification operation when a notification timing comes. In this Embodiment, the notification control portion 107 executes operation control of the turning lamp 181 (see FIG. 6A and the like).

### 3. Automated Traveling Method

Subsequently, a method of automated traveling (automated traveling method) in the work vehicle 100 of this Embodiment will be explained. In this Embodiment, the automated traveling method in the work vehicle 100 is realized by causing a computer (the control device 10) to execute arithmetic processing according to a program. In other words, the program for causing the computer to execute the automated traveling method causes the computer to function as means for performing the operation described below.

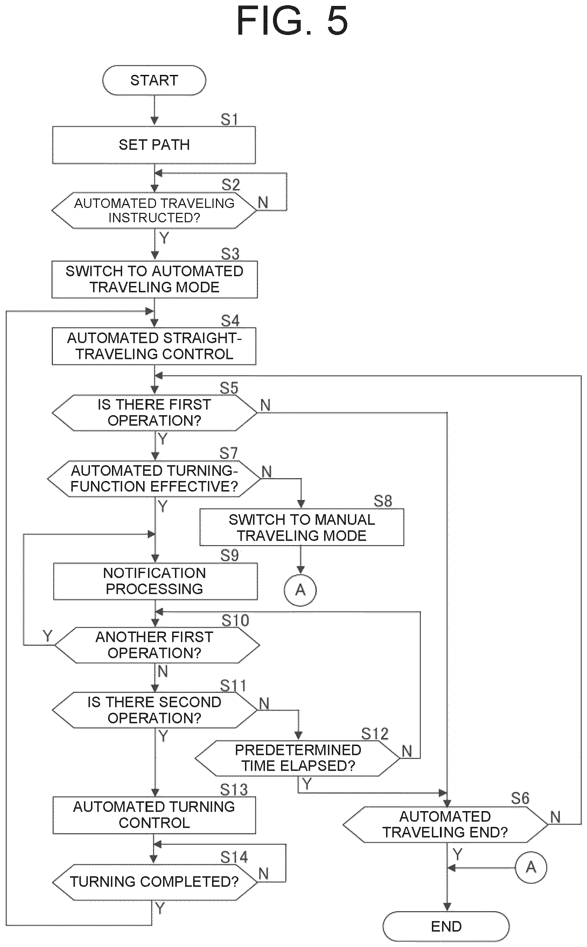

FIG. 5 is a flowchart exemplifying a flow of the automated traveling method according to the Embodiment of the present invention. In this Embodiment, processing shown in FIG. 5 is executed when the vehicle main-body 1 and the remote operation device 2 are in a state capable of communicating with each other. **In** addition, the processing shown in FIG. 5 is executed when the vehicle main-body 1 is present in a work target place such as a field in principle.

At Step S1, the control device 10 (specifically, the path generation portion 103) sets a traveling path for causing the vehicle main-body 1 to perform automated traveling. The traveling path for causing the vehicle main-body 1 to perform the automated traveling is generated, when the point A registration instruction and the point B registration instruction are given by using the remote operation device 2 as described above, and the generated traveling path is set as the traveling path for the automated traveling. Upon setting of the traveling path, processing proceeds to the subsequent Step S2.

At Step S2, the control device 10 (specifically, the receiving portion 102) monitors whether or not there is an instruction of automated traveling from the operator. In this Embodiment, the instruction of the automated traveling is given by the operator pressing the first operation switch 25a of the remote operation device 2 once as described above. The control device 10 determines that there was an instruction of automated traveling by receiving the operation. When it is determined that there was an instruction of automated traveling (Yes at Step S2), the processing proceeds to subsequent Step S3. When it is not determined that there was an instruction of automated traveling (No at Step S2), the processing at Step S2 continues.

At Step S3, the control device 10 (specifically, the traveling-mode control portion 104) switches the traveling mode to the automated traveling mode. As a result, the automated traveling mode is started. When the automated traveling mode is started, the processing proceeds to subsequent Step S4. Note that, in this Embodiment, at the start of the automated traveling mode, the vehicle main-body 1 is located at one end part, which is one of a plurality of straight paths included in the traveling path for the automated traveling. The one end part is, for example, one end part of a straight path adjacent to the reference line KS1 (see FIG. 4). The vehicle main-body 1 is moved to the one end part by manual traveling using the remote operation device 2. The movement by the manual traveling is, for example, turning movement of reversing the front and the rear of the vehicle main-body 1 from the point B.

However, this is merely an exemplification, and the vehicle main-body 1 may be located at the point B, which is one end part of the reference line KS1, at the start of the automated traveling mode. When the vehicle main-body 1 is at the point B, the automated turning traveling is performed prior to the automated straight traveling described below. The automated turning traveling is performed by executing a first operation (see Step S5 and Step S10) and a second operation (see Step S11) in this order by using the remote operation device 2, which will be described below.

At Step S4, the control device 10 (specifically, the traveling control portion 105) starts automated control of steering (automated straight-traveling control) such that the vehicle main-body 1 travels along the straight path set as the path for the automated traveling. During the automated straight-traveling control, the vehicle main-body 1 performs the automated straight traveling, when the first operation lever 24a of the remote operation device 2 is tilted in the forward direction F1 (see FIG. 2) by the operator. The traveling speed of the vehicle main-body 1 is adjusted by the amount of tilting of the first operation lever 24a in the forward direction F1. When the automated straight-traveling control is started, the processing proceeds to subsequent Step S5.

Note that the work machine 12 is operated by a manual operation using the remote operation device 2 as necessary during the automated straight-traveling control. In addition, it is preferable that the work machine 12 is lowered to a workable position by a manual operation using the remote operation device 2 at the start of the automated straight-traveling control. As a result, the automated traveling work using the work machine 12 can be smoothly started at the same time as the start of the automated straight traveling.

At Step S5, the control device 10 (specifically, the receiving portion 102) determines whether or not the first operation of instructing the turning direction has been performed in the remote operation device 2. In this Embodiment, the control device 10 determines that the first operation has been performed, when an operation of tilting the first operation lever 24a in the turning direction L1 or R1 (see FIG. 2) has been performed in the remote operation device 2. Specifically, when the first operation lever 24a is tilted in the left-turning direction L1, the control device 10 receives a turning instruction to the left direction. When the first operation lever 24a is tilted in the right-turning direction R1, the control device 10 receives a turning instruction to the right direction. As is known from the above-described description, the remote operation device 2 includes the operation lever 24a for performing the first operation. In addition, in the automated traveling method according to this Embodiment, the reception of the first operation of instructing the turning by the remote operation device 2 is executed. When it is determined that the first operation has been performed (Yes at Step S5), the processing proceeds to Step S7. When it is determined that the first operation has not been performed (No at Step S5), the processing proceeds to Step S6.

At Step S6, the control device 10 (for example, the receiving portion 102) determines whether or not it is in such a state that the automated traveling should be ended. For example, in a case of an instruction to switch to the manual traveling using the first operation switch 25a, it is determined to be in such a state that the automated traveling should be ended. In addition, when the communication between the vehicle main-body 1 and the remote operation device 2 is discontinued, it is determined to be in such a state that the automated traveling should be ended. When it is determined to be in such a state that the automated traveling should be ended (Yes at Step S6), the flow shown in FIG. 5 is ended. Note that, instead of ending the flow, it may be configured such that the processing returns to Step S1 or Step S2. When it is determined to be not in such a state that the automated traveling should be ended (No at Step S6), the processing is returned to Step S5.

At Step S7, the control device 10 (for example, the receiving portion 102 or the like) determines whether or not the automated turning function is set to be enabled. Note that whether the automated turning function is enabled or disabled is set in advance by the operator or the like using the operation portion 17 (see FIG. 3) as described above. When the automated turning function is enabled (Yes at Step S7), the processing proceeds to Step S9. When the automated turning function is disabled (No at Step S7), the processing proceeds to Step S8.

At Step S8, the control device 10 (specifically, the traveling-mode control portion 104) switches the traveling mode from the automated traveling mode to the manual traveling mode. As a result, the control device 10 (specifically, the traveling control portion 105) performs traveling by the manual operation in accordance with the instruction of the remote operation device 2. In other words, when the automated turning function is disabled, the vehicle main-body 1 is switched from the automated traveling mode for performing the automated traveling to the manual traveling mode in response to the first operation and makes a turn in accordance with the first operation. Specifically, when the first operation at Step S5 is an operation of instructing a left turn (an operation of tilting the first operation lever 24a in the left-turning direction L1), the vehicle main-body 1 enters the manual traveling mode and makes a left turn in accordance with the instruction from the remote operation device 2. When the first operation at Step S5 is an operation of instructing a right turn (an operation of tilting the first operation lever 24a in the right-turning direction R1), the vehicle main-body 1 enters the manual traveling mode and makes a right turn in accordance with the instruction from the remote operation device 2. When the vehicle main-body 1 is performing the automated straight traveling, the operator can forcibly end the automated straight traveling and manually turn the vehicle main-body 1.

Note that, when the processing at Step S8 is completed, the flow shown in FIG. 5 is ended. The signs "A" at two positions shown in FIG. 5 are merely for convenience, which mean that both are connected. In addition, instead of ending the flow, it may be so configured that the processing returns to Step S1 or Step S2.

At Step S9, the control device 10 (specifically, the notification control portion 107) executes processing of causing the notification portion 18 (see FIG. 3) to give notification. That is, the vehicle main-body 1 includes the notification portion 18 that gives notification in response to the first operation (see Step S5). By configuring such that the notification is given by the notification portion 18 in response to the first operation, it is possible to make it easy for the operator who gives an instruction to the vehicle main-body 1 using the remote operation device 2 to grasp what kind of instruction has been given by the operator himself / herself by the first operation.

Specifically, the control device 10 controls the turning lamp 181 included in the notification portion 18 to cause the notification operation to be performed. This will be described in more detail with reference to FIG. 6A and FIG. 6B. FIG. 6A and FIG. 6B are diagrams for explaining the notification operation performed in the vehicle main-body 1 with the first operation. The advancing direction of the vehicle main-body 1 as viewed from the operator 200 is different between FIG. 6A and FIG. 6B. In FIG. 6A and FIG. 6B, the vehicle main-body 1 is expressed to be moving forward with the vehicle main-body 1 as a reference. However, when expressed with the operator 200 as a reference, the vehicle main-body 1 is traveling in a direction away from the operator 200 in FIG. 6A and is traveling in a direction toward the operator 200 in FIG. 6B.

The turning lamps 181 are lamps for indicating the turning direction of the vehicle main-body 1 as described above, and are provided on the left and right of the vehicle main-body 1. Specifically, the turning lamps 181 are provided at the front part and the rear part of the traveling machine-body 11 so that the turning lamps 181 are easily visible regardless of the difference in the direction of the vehicle main-body 1 as viewed from the operator 200. More specifically, a left-turning lamp 181L is provided at a front part and a rear part on the left side of the traveling machine-body 11, and a right-turning lamp 181R is provided at a front part and a rear part on the right side of the traveling machine-body 11.

In FIG. 6A and FIG. 6B, an open solid-line arrow indicates that the first operation using the first operation lever 24a was performed. In each of FIG. 6A and FIG. 6B, two open solid-line arrows indicating the first operation are aligned vertically. It is illustrated that the first operation on the upper side is an operation for instructing a left turn in which the first operation lever 24a is tilted in the left-turning direction L1, and the first operation on the lower side is an operation for instructing a right turn in which the first operation lever 24a is tilted in the right-turning direction R1. In each of FIG. 6A and FIG. 6B, the vehicle main-body 1 shown on the right side of each of open solid-line arrows indicates a state of the vehicle main-body 1 after each of the first operations.

The control device 10 causes the turning lamp 181 of the turning direction instructed by the first operation to emit light. That is, when the first operation is an instruction to turn left, the left-turning lamp 181L emits light as shown on the upper right side in the drawings of FIG. 6A and FIG. 6B. In addition, when the first operation is an instruction to turn right, the right-turning lamp 181R emits light as shown on the lower right side in FIG. 6A and FIG. 6B. Note that, in FIG. 6A and FIG. 6B, a state in which the turning lamp 181 emits light is indicated by black, and a state in which the turning lamp 181 does not emit light is indicated by white.

As can be seen from the comparison between FIG. 6A and FIG. 6B, when viewed from the operator 200, even if the turning instruction is to the same left direction (or the right direction), the left and right directions in which the vehicle main-body 1 turns are opposite between the case where the vehicle main-body 1 approaches the operator and the case where the vehicle main-body 1 moves away from the operator. Therefore, there is a possibility that an operator who is unfamiliar with the operation using the remote operation device 2 might mistake the instruction on the turning direction. In this regard, in this Embodiment, since the turning lamp 181 of the turning direction instructed by the operator emits light in accordance with the first operation, the operator 200 can instantaneously grasp in which direction the vehicle main-body 1 is turning as viewed from the operator. Therefore, it is possible to confirm whether or not the turning instruction given by himself / herself is correct immediately after the instruction.

Note that the light emission of the turning lamp 181 may be, for example, simple lighting, blinking or the like. **In** addition, at the time point of Step S9, the automated turning of the vehicle main-body 1 has not been started, and the vehicle main-body 1 is in a standby state for the automated turning. That is, the operator 200 can confirm whether or not the turning instruction given by himself / herself by the first operation is correct before the automated turning traveling is started.

Further, in this Embodiment, it may be so configured that the light emission provided in the vehicle main-body 1 is used as the notification means for notifying that the instruction of the turning direction was received, but it may be so configured that another means such as voice is used instead of or in addition to the light emission. For example, correspondingly to the turning-on of the turning lamp 181, at least either one of the vehicle main-body 1 and the remote operation device 2 may output voice such as "turning in the direction in which the turning lamp is turned on".

In addition, when the vehicle makes a turn in the manual traveling mode in the processing at Step S8 described above, the turning lamp 181 emits light in accordance with the turning direction in order to notify the turning direction. For this reason, the order of the processing at Step S7 and the processing at Step S9 may be reversed.

Returning to FIG. 5, when the notification processing at Step S9 is completed, the processing proceeds to the subsequent Step S10.

At Step S10, the control device 10 (specifically, the receiving portion 102) determines whether or not there is another first operation different from the previous first operation (for example, the first operation at Step S5) in the remote operation device 2. Another first operation is a first operation in which an instructed turning direction is different from that of the previous first operation. For example, when the previous first operation was a first operation of instructing a left turn, the first operation of instructing a right turn is another first operation. In addition, for example, when the previous first operation was an operation of instructing a right turn, the first operation of instructing a left turn is another first operation. When it is determined that another first operation has been performed (Yes at Step S10), the processing is returned to Step S9. When it is determined that another first operation has not been performed (No at Step S10), the processing proceeds to Step S11.

Note that, when another first operation is performed not only once but repeatedly a plurality of times, there is a possibility that the operator is confused about the turning instruction. For this reason, when another first operation is repeated a plurality of times, it may be so configured that the traveling of the vehicle main-body 1 is automatedly stopped for safety.

At Step S11, the control device 10 (specifically, the receiving portion 102) determines whether or not the second operation subsequent to the first operation has been performed in the remote operation device 2. In this Embodiment, the control device 10 determines that a second operation has been performed, when an operation of pressing the first operation switch 25a (operation of pressing once, for example) in the remote operation device 2. The second operation is an operation for instructing performance (start) of the automated turning. As is known from the above-described explanation, the remote operation device 2 includes the operation switch 25a for performing the second operation. When it is determined that the second operation has been performed (Yes at Step S11), the processing proceeds to Step S13. When it is determined that the second operation has not been performed (No at Step S11), the processing proceeds to Step S12.

At Step S12, the control device 10 (specifically, the receiving portion 102) determines whether or not a predetermined time has elapsed since it was determined that the first operation (another first operation when there was another first operation) was performed. If the predetermined time has elapsed (Yes at Step S12), the processing proceeds to the above-described Step S6. If the predetermined time has not elapsed (No at Step S11), the processing returns to Step S10 described above.

At Step S13, the control device 10 (specifically, the traveling control portion 105) starts the automated turning control. Specifically, the control device 10 causes the vehicle main-body 1 to start turning by automated traveling (automated turning traveling). That is, when the first operation and the second operation subsequent to the first operation are performed in the remote operation device 2, the vehicle main-body 1 starts the automated turning traveling. In the automated traveling method of this Embodiment, the vehicle main-body 1 is caused to start turning by the automated traveling by the second operation subsequent to the first operation by the remote operation device 2. More specifically, when the automated traveling mode was selected by the control device 10, if the first operation and the second operation were performed, the vehicle main-body 1 starts automated turning traveling.

With the configuration as above, since two-stage operations are required to start the automated turning traveling, it is possible to prevent the automated turning traveling from starting at an unintended timing due to an erroneous operation. In addition, since it is configured such that the vehicle main-body 1 receives the instruction of the turning direction in the initial operation (first operation) of the two-stage operation, the operator can be notified of the planned turning direction during the automated turning traveling on the vehicle main-body 1 side. That is, the operator can start the automated turning traveling by the subsequent operation (second operation) after confirming in which direction the automated turning traveling is started by the instruction by himself / herself after the initial operation (first operation). Thus, it is possible to prevent the automated turning traveling from being started in a wrong turning direction.

In addition, as is known from the above, in this Embodiment, the operation of the vehicle main-body 1 after the first operation is different depending on whether the automated turning function is enabled or disabled. Specifically, when the automated turning function is enabled, the vehicle main-body 1 waits for the second operation after the first operation and then, starts turning by the automated traveling. In addition, as described above, when the automated turning function is disabled, the vehicle main-body 1 is switched from the automated traveling mode to the manual traveling mode in response to the first operation and makes a turn in accordance with the first operation. Depending on the setting in advance using the operation portion 17 provided in the vehicle main-body 1, different functions can be exerted with respect to the same operation (first operation) in the remote operation device 2. Thus, it is possible to increase options of the operator regarding a utilization method of the work vehicle 100 without increasing the number of operation portions in the remote operation device 2 as much as possible.

When the automated turning control is started, the vehicle main-body 1 performs the automated turning traveling under the control of the control device 10 (the traveling control portion 105). The automated turning traveling refers to such a state that at least steering is autonomously performed to perform the turning traveling by devices related to the traveling being controlled by the control device 10, and the control of the speed and the work machine 12 at the time of turning may or may not be autonomously performed. The automated turning traveling in this Embodiment is a state in which only steering is autonomously performed to perform the turning traveling.

During the automated turning traveling, the first operation lever 24a of the remote operation device 2 is tilted in the forward / backward direction F1-R1, whereby the automated turning traveling is performed. When the first operation lever 24a is tilted to the forward direction F1, for example, the vehicle main-body 1 performs the automated turning traveling while moving forward. Note that, at the point of time when the automated turning traveling is started, the work machine 12 is preferably in a non-working state by a manual operation. The non-working state includes, for example, a state in which the work machine 12 is raised to a height position at which a work cannot be performed and a state in which power is not transmitted to the work machine 12.

The automated turning traveling may be configured such that the turning traveling is performed along a turning path generated in accordance with a setting state of the remote operation device 2 or the like. However, this is not limiting, and the automated turning traveling may be configured to make a turn within a preset turning radius. It may be so configured that the turning radius can be selected by the operator. For example, the operator may select the setting of the turning radius (for example, "large", "medium", "small" or the like), and the automated turning traveling may be performed with the turning radius corresponding to the selected setting. In this Embodiment, the automated turning traveling is performed along a turning path generated in accordance with the setting state of the remote operation device 2 or the like.

Note that, during the automated turning traveling, the turning lamp 181 indicating a turning direction emits light. The light emission form of the turning lamp 181 at this time may be the same as or different from the light emission form of the turning lamp 181 in the notification processing at Step S9. For example, the light emission form of the turning lamp 181 in a turning-standby state (state at the time of notification at Step S9) may be blinking, and the light emission form of the turning lamp 181 after the start of automated turning may be lighting.

When the processing at Step S13 (start of the automated turning traveling) is completed, the processing proceeds to the subsequent Step S14.

At Step S14, the control device 10 (specifically, the traveling control portion 105) monitors whether or not the automated turning traveling has been completed. In this Embodiment, the completion of the automated traveling is a state in which the traveling of the set turning path is completed and a state in which the vehicle can enter the next straight path. The determination of the state may be made by using, for example, information obtained from the positioning communication unit 14 or the inertial measurement unit. When it is determined that the automated turning traveling has been completed (Yes at Step S14), the processing returns to Step S4, the automated straight-traveling control is started, and the processing at Step S4 described above and after is repeated. When it is not determined that the automated turning traveling has been completed (No at Step S14), the processing at Step S14 is continued.

By means of the control processing as above, the vehicle main-body 1 repeats the working traveling on the straight traveling path and the non-working traveling on the turning path by the automated traveling and completes the work in the work target place such as the field.

### 4. Notes and the like

The various technical features disclosed in this specification can be modified in various ways within a range not departing from the gist of the technical creation thereof. In addition, the plurality of embodiments and variations described in this specification may be embodied in combinations within a range to the extent possible.

### 5. Supplementary Notes

An exemplary work vehicle of the present invention may be configured (first configuration) to include: a vehicle main-body provided capable of automated traveling in which at least steering is automatedly performed; and a remote operation device that operates the vehicle main-body, in which the vehicle main-body starts turning by the automated traveling by performing a first operation of instructing a turning direction and a second operation subsequent to the first operation in the remote operation device.

The work vehicle of the above-described first configuration may be also configured (second configuration) to include a control device that switches between an automated traveling mode in which the work vehicle travels automatedly and a manual traveling mode in which the work vehicle travels by a manual operation, in which, in a case where the automated traveling mode is selected by the control device, when the first operation and the second operation are performed, the vehicle main-body starts turning by the automated traveling.

In the work vehicle of the above-described first or second configuration, the remote operation device may be configured to include an operation lever for performing the first operation and an operation switch for performing the second operation (third configuration).

In the work vehicle of any one of the above-described first to third configurations, the vehicle main-body may be configured to include a notification portion that gives notification in response to the first operation (fourth configuration).

The work vehicle of any one of the above-described first to fourth configurations may have such a configuration (fifth configuration) that an automated turning function of performing turning by the automated traveling is provided so as to be switchable between enabling and disabling, and an operation of the vehicle main-body after the first operation is different depending on whether the automated turning function is enabled or disabled.

In the work vehicle of the above-described fifth configuration, it may be so configured that, in a case where the automated turning function is enabled, when the first operation and the second operation are performed, the vehicle main-body starts turning by the automated traveling, and in a case where the automated turning function is disabled, the vehicle main-body shifts from an automated traveling mode in which the automated traveling is performed to a manual-traveling mode by the first operation and makes a turn in accordance with the first operation (sixth configuration).

In the work vehicle of the above-described fifth or sixth configuration, the vehicle main-body may be configured to include a switching operation portion that switches between enabling and disabling of the automated turning function (seventh configuration).

### REFERENCE SIGNS LIST

1 Vehicle main-body
2 Remote operation device
10 Control device
17 Operation portion (switching operation portion)
18 Notification portion
24a First operation lever (operation lever)
25a First operation switch (operation switch)
100 Work vehicle
181 Turning lamp (notification portion)
181L Left-turning lamp (notification portion)
181R Right-turning lamp (notification portion)

## Claims

1. A work vehicle comprising:
a vehicle main-body provided capable of automated traveling in which at least steering is automatedly performed; and
a remote operation device that operates the vehicle main-body, wherein
in the remote operation device,
the vehicle main-body starts turning by the automated traveling by performing:
a first operation of instructing a turning direction; and
a second operation subsequent to the first operation.

2. The work vehicle according to claim 1, further comprising: a control device that switches between an automated traveling mode in which the automated traveling is performed and a manual traveling mode in which the work vehicle travels by a manual operation, wherein
in a case where the automated-traveling mode is selected by the control device, when the first operation and the second operation are performed, the vehicle main-body starts turning by the automated traveling.

3. The work vehicle according to claim 1 or 2, wherein
the remote operation device includes:
an operation lever that performs the first operation; and
an operation switch that performs the second operation.

4. The work vehicle according to claim 1 or 2, wherein the vehicle main-body includes a notification portion that gives notification in response to the first operation.

5. The work vehicle according to claim 1 or 2, wherein an automated turning function of performing turning by the automated traveling is provided capable of switching between enabling and disabling; and
an operation of the vehicle main-body after the first operation is different depending on whether the automated turning function is enabled or disabled.

6. The work vehicle according to claim 5, wherein
in a case where the automated turning function is enabled, when the first operation and the second operation are performed, the vehicle main-body starts turning by the automated traveling; and in a case where the automated turning function is disabled, the vehicle main-body shifts from an automated traveling mode in which the automated traveling is performed to a manual-traveling mode by the first operation and makes a turn in accordance with the first operation.

7. The work vehicle according to claim 5, wherein the vehicle main-body includes a switching operation portion that switches between enabling and disabling of the automated turning function.

8. An automated traveling method, which is a method of automated traveling in a work vehicle that performs an operation of a vehicle main-body by a remote operation device, comprising:
receiving a first operation of instructing a turning direction by the remote operation device; and
causing the vehicle main-body to start turning by the automated traveling by a second operation subsequent to the first operation by the remote operation device.

9. A program for causing a computer to execute a method of automated traveling in a work vehicle that performs an operation of a vehicle main-body by a remote operation device, comprising:
causing the computer to function as means to:
receive a first operation instructing a turning direction by the remote operation device; and
cause the vehicle main-body to start turning by the automated traveling by a second operation subsequent to the first operation by the remote operation device.
